# EUROPÄISCHE PATENTANMELDUNG

(11) **EP 2 450 244 A1**
(43) Veröffentlichungstag der Anmeldung: **09.05.2012**
(21) Anmeldenummer: 12153561.1
(22) Anmeldetag: 14.10.2008
(51) Int. Cl.: B60S 1/38, B60S 1/40

(54) **Wischblatt**

(30) Priorität: 03.12.2007 DE 102007058091
(62) Teilanmeldung aus: 08857070.0
(71) Anmelder: Robert Bosch GmbH, 70442 Stuttgart (DE)
(72) Erfinder: Op't Roodt, Inigo, 3500 Hasselt (BE); Van Baelen, David, 3020 Winksele (BE)

(57) **Zusammenfassung**

Die Erfindung geht von einem Wischblatt (10) mit einer Wischleiste (12) aus, deren Kopfleiste (18) auf beiden Längsseiten jeweils eine Längsnut (20) hat, die durch einen Steg (22) voneinander getrennt sind und in die Federschienen (24) eingesetzt sind, die zu den äußeren Längsseiten offene Aussparungen (28) aufweisen, durch die sie in Längsrichtung relativ zu Endkappen (38) fixiert sind, wobei die Endkappen (38) Distanznocken (44) aufweisen, die von den Stirnseiten in einen Spalt (36) zwischen den Federschienen (24) ragen. Es wird vorgeschlagen, dass die Federschienen (24) an ihren inneren Längsseiten Aussparungen (28) aufweisen, die spiegelbildlich zu den Aussparungen (28) an den äußeren Längsseiten angeordnet sind.

## Beschreibung

### Stand der Technik

Die Erfindung geht von einem Wischblatt nach dem Oberbegriff des Anspruchs 1 aus.

Aus der DE 10 2004 019 158 A1 ist ein gelenkfreies Wischblatt mit einer Wischleiste bekannt, dessen Kopfleiste an ihren Längsseiten jeweils eine nach außen hin offene Längsnut aufweist. In diese Längsnuten sind Federschienen eingelegt, wobei die seitlich aus den Längsnuten vorstehenden Teile von Führungsprofilen eines Trägers umfasst werden. Auf die Enden der Federschienen, die aus dem Träger herausragen, werden Endkappen geschoben. Sie umfassen von außen mit nach innen offenen u-förmigen Führungsprofilen die Führungsschienen. Ein Distansznocken an der Innenseite einer Stirnseite greift in den Zwischenraum der Federschienen und hält deren Enden auf Abstand.

Die Führungsprofile der Endkappen haben Vorsprünge mit Löchern, die quer zu den Nuten in den Führungsprofilen der Endkappe verlaufen und Aussparungen an den Außenseiten der Federschienen im montierten Zustand überdecken. Im geringen Abstand zu diesen Aussparungen sind an den Federschienen weitere Aussparungen vorgesehen, die zu Löchern an den Enden der Führungsprofile des Trägers passend angeordnet sind. Schenkel eines haarnadelförmigen Bügels werden durch die Löcher und die entsprechenden Ausnehmungen gesteckt, sodass der Träger, die Federschienen und die Endkappen formschlüssig zusammengefügt sind. Zwei einander gegenüberliegende Bügel der beiden Federschienen sind durch einen Quersteg zu einem Verbindungselement verbunden.

Aus der DE 10 2004 058 684 A1 ist ein Wischblatt bekannt, das zum gelenkigen Anschluss eines Wischarms eine Adapterkappe aus Kunststoff aufweist. Sie besitzt zwei Seitenwände, die durch eine Frontwand und eine Decke miteinander verbunden sind. Am antriebsseitigen Ende der Frontwand, die bündig mit den Seitenwänden nach oben abschließt, ist eine Lagerwalze angeformt, die quer zur Wischleiste und oberhalb von dieser verläuft und mit der benachbarten Stirnwand der Decke eine Öffnung bildet. Die Lagerwalze dient zur Lagerung eines Wischarms, der als Federbalkenwischarm ausgebildet ist und einen Federbalken besitzt, an dessen Ende ein Endstück mit einem vorzugsweise flachen Teil angeformt ist. Anstelle eines Federbalkenwischarms können auch andere Wischarmdesigns treten, die ein entsprechendes Endstück aufweisen. Das freie Ende des Endstücks ist zum Wischblatt hin gekröpft und bildet eine Lagerlasche, die im montierten Zustand die Lagerwalze teilweise umfasst.

Zweckmäßigerweise ist an dem Quersteg ein Pin angeordnet, durch den die Wischleiste gegenüber den Federschienen und den Endkappen fixiert ist, indem der Pin im montierten Zustand mit einer unteren Kante gegen die Kopfleiste der Wischleiste drückt.

### Offenbarung der Erfindung

Nach der Erfindung weisen die Federschienen an ihren inneren, einander zugewandten Längsseiten Aussparungen auf, die spiegelbildlich zu den Aussparungen an den äußeren Längsseiten angeordnet sind. Dadurch können die Federschienen unverwechselbar auf beiden Seiten der Wischleiste montiert werden. In einer Ausgestaltung der Erfindung besitzen die Endkappen Rastnasen, die in die Aussparungen an den äußeren Längsseiten der Federschienen eingreifen. Somit können zusätzliche Bügelteile entfallen.

Nach einer weiteren Ausgestaltung der Erfindung besitzen die Federschienen im Bereich des Distanznockens schmale Enden, sodass der Spalt zwischen ihnen in diesem Bereich breiter ist, als auf seiner übrigen Länge. Die schmalen Enden sind symmetrisch zur Längsmittelebene der jeweiligen Federschiene ausgebildet, sodass auch hierbei eine unverwechselbare Montage gewährleistet ist. Der breite Spalt an den Enden der Federschienen ermöglicht einen breiteren Distanznocken, der im Betrieb eine ausreichende Steifigkeit und Festigkeit besitzt. Anstelle des Distanznockens zwischen den Federschienen oder zusätzlich zu diesem, kann die Endkappe weitere Distanznocken aufweisen, die in entsprechende Aussparungen an den Stirnseiten der Federschienen eingreifen. Auch diese sind zweckmäßigerweise jeweils symmetrisch zu der Längsmittelebene der zugehörigen Federschiene angeordnet.

Um ein Anschlusselement im mittleren Bereich der Länge der Federschienen zu fixieren, ist es zweckmäßig, dass die Federschienen dort an ihren beiden Längsseiten Aussparungen aufweisen, die spiegelbildlich zueinander angeordnet sind, und in die mindestens ein Rastnocken eines Anschlusselements eingreift. Der Rastnocken ist dabei vorteilhaft in einer Nut eines Führungsprofils vorgesehen, das auf einem aus der Längsnut vorstehenden Teil der Federschiene sitzt.

Zum gelenkigen Verbinden eines Wischarms mit dem Anschlusselement besitzt dieses eine Nabe, die zu einer von der Wischleiste abgewandten Seite offen ist, und aus festen Klippteilen in den Seitenwänden des Anschlusselements und einem Lagerteil gebildet wird, das an Federzungen angeordnet ist. Durch die festen Klippteile wird eine präzise Führung und Lagerung einer Achse des Wischarms gewährleistet, die von der offenen Nabe aufgenommen wird, während durch das Lagerteil an den Federzungen die Achse des Wischarms in Form einer Klippverbindung in der Nabe gehalten wird. Das Lagerteil kann auf Grund seiner größeren Nachgiebigkeit die Achse des Wischarms zur offenen Seite der Nabe hin auf einem größeren Umfangsbereich umfassen als die festen Klippteile. Um die Wischleiste relativ zum Anschlusselement in Längsrichtung zu fixieren, ist gemäß einer weiteren Ausgestaltung vorgesehen, dass das Anschlusselement an seiner der Kopfleiste zugewandten Seite einen Fixiernocken besitzt, der in montiertem Zustand gegen die Kopfleiste drückt.

Das Anschlusselement mit seiner offenen Nabe wird im montierten Zustand von einer Verriegelungskappe abgedeckt. Diese ist auf der Außenkontur des Führungsprofils des Anschlusselements geführt. Zum Verriegeln weist sie vorteilhafterweise in ihren Wangen parallel zu ihren Führungsprofilen verlaufende Langlöcher auf, die jeweils an einem einem Wischarm zugewandten Ende eine Montageöffnung für eine Gelenkachse des Wischarms besitzen, während das andere Ende als Verriegelungsteil ausgebildet ist. Während der Montage wird die Achse des Wischarms durch die Montageöffnungen in die offene Nabe eingesetzt. Daraufhin wird die Verriegelungskappe weiter in Längsrichtung verschoben, sodass der Verriegelungsteil die Montageöffungen verschließt. In der Schließstellung ist es zweckmäßig, dass die Verriegelungskappe an der Innenseite eine Arretierung besitzt, die mit einem Rasthaken an der dem Wischarm abgewandten Stirnseite des Verbindungselements zusammenwirkt. Dadurch ist die Verriegelungskappe in der Schließstellung blockiert. Der Rasthaken kann zur Demontage zurückgedrückt werden, sodass die Verriegelungskappe in eine Öffnungsposition zurückgeschoben werden kann.

Gemäß einer Ausgestaltung der Erfindung ist die Verriegelungskappe auf der Außenkontur des Führungsprofils des Anschlusselements geführt, wobei das Anschlusselement zum größten Teil von der Verriegelungskappe und der Rest von dem Wischarmprofil abgedeckt werden, das sich bündig an die Verriegelungskappe anschließt. Die Verriegelungskappe hat an dem dem Wischarm zugewandten Ende an ihren Wangen nach innen abgewinkelte Führungsklauen, die in nach außen weisende Führungsnuten an den Seitenwänden des Anschlusselements eingreifen. Durch die Führungsklauen stützt sich die Verriegelungskappe zusätzlich zu ihrem Führungsprofil an dem Anschlusselement ab. Dadurch ergibt sich eine gute Verbindung zwischen diesen beiden Bauteilen.

Um das Wischblatt mit einer Wischarmart zu kombinieren, bei der an der Stirnseite des Wischarms eine Lagerlasche angeformt ist, ist an dem Anschlusselement gemäß einer Ausgestaltung der Erfindung ein Adapterelement befestigt, das mit einer Achse zwischen seinen Seitenwänden in die offene Nabe des Anschlusselements eingesetzt ist und durch Führungsflächen an den Innenseiten seiner Seitenwände seitlich geführt ist, wobei in einer Stirnkappe des Adapterelements ein Lagerelement für den Wischarm vorgesehen ist. Das Lagerelement kann zweckmäßigerweise aus mehreren parallel zueinander, in Längsrichtung angeordneten Rippen bestehen, deren Außenkonturen eine Lagerwalze bilden. Diese wird von der Lagerlasche des Wischarms im montierten Zustand teilweise umfasst, sodass das Wischblatt relativ zum Wischarm begrenzt schwenkbar ist.

Gemäß einer Ausgestaltung der Erfindung weist das Adapterelement des Wischblatts in Verlängerung seiner Seitenwände Federrasten auf, die im montierten Zustand in Aussparungen des Wischarms einrasten. Die Federrasten und die Aussparungen sind so dimensioniert, dass sie die Schwenkbewegung zwischen dem Wischblatt und dem Wischarm nicht behindern.

Schließlich kann das Wischblatt mit einer dritten Art von Wischarmen gelenkig verbunden werden, bei der der Wischarm an seinem dem Wischblatt zugewandten Ende ein u-förmiges Querschnittprofil aufweist, das durch eine Stirnwand in Längsrichtung bis auf eine Aussparung für die Kopfleiste abgeschlossen ist. In dem Innenraum des u-förmigen Querschnittprofils sind etwa parallel zu den Seitenwänden in Längsrichtung verlaufende Längswände vorgesehen, die an ihren Innenseiten Führungsflächen für das Anschlusselement des Wischblatts besitzen sowie eine Achse tragen und außen durch Querrippen an den Seitenwänden angeschlossen sind. Bei dieser Lösung wird das Anschlusselement vom Wischarm abgedeckt, wobei die Aussparung in der Stirnseite eine ausreichende Schwenkbewegung zwischen dem Wischblatt und dem Wischarm zulässt.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

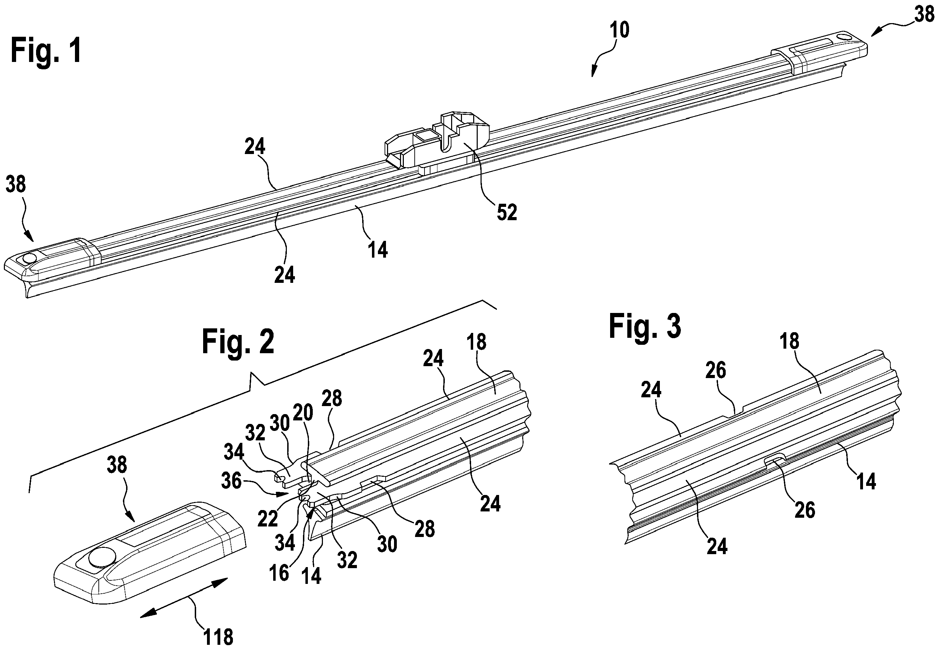

- Fig. 1: eine perspektivische Seitenansicht eines erfindungsgemäßen Wischblatts,
- Fig. 2: ein Ende eines Wischblatts nach Fig. 1 in einer Teilexplosionsdarstellung,
- Fig. 3: einen mittleren Teil eines Wischblatts nach Fig. 1 ohne Anschlusselement,
- Fig. 4: eine Endkappe in perspektivischer Ansicht,
- Fig. 5: eine Endkappe mit Federschienen in einer Ansicht von unten,
- Fig. 6: eine perspektivische Ansicht eines Anschlusselements,

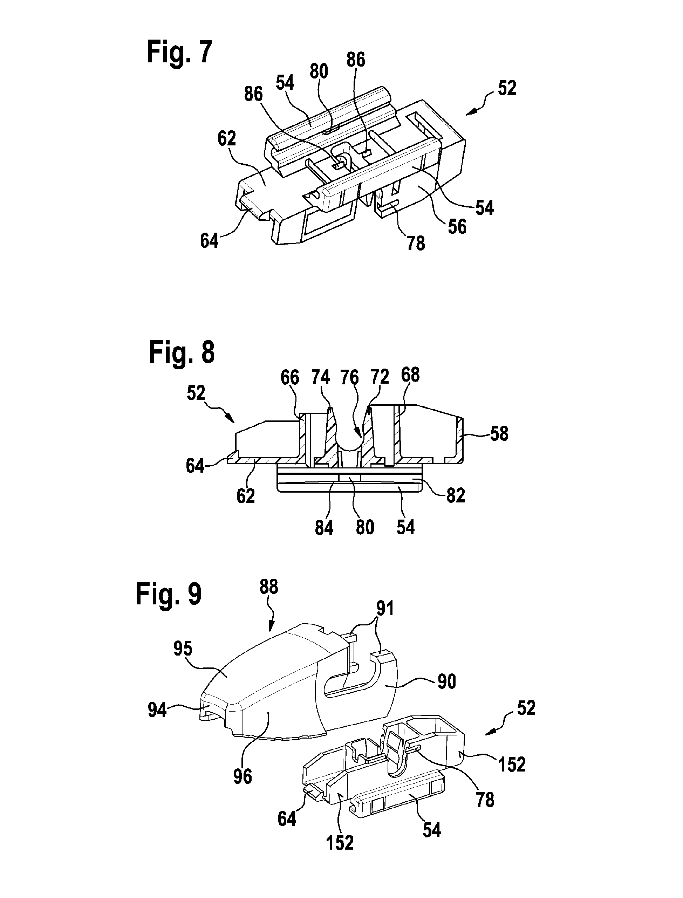

- Fig. 7: eine perspektivische Ansicht des Anschlusselements nach Fig. 6 von unten,
- Fig. 8: einen Schnitt entsprechend der Linie VIII-VIII in Fig. 6,
- Fig. 9: das Anschlusselement nach Fig. 6 mit einer Verriegelungskappe in einer Explosionsdarstellung,
- Fig. 10: eine perspektivische Teilansicht eines Wischblatts nach Fig. 1 mit der Verriegelungskappe und einem Wischarm während der Montage,
- Fig. 11: eine perspektivische Ansicht der Verriegelungskappe vom Anschlusselement aus,
- Fig. 12: eine perspektivische Ansicht der Verriegelungskappe von unten,
- Fig. 13: eine perspektivische Teilansicht eines Wischblatts mit einem Adapterelement,
- Fig. 14: ein Wischblatt nach Fig. 13 mit einem Wischarm während der Montage,
- Fig. 15: ein Wischblatt nach Fig. 13 mit einem montierten Wischarm,
- Fig. 16: eine perspektivische Ansicht des Adapterelements nach Fig. 13,
- Fig. 17: das Adapterelement nach Fig. 16 in einer Ansicht von unten,
- Fig. 18: das Adapterelement nach Fig. 16 auf dem Anschlusselement montiert,
- Fig. 19: eine perspektivische Darstellung des Wischblatts mit dem Anschlusselement während der Montage mit einem Wischarm,
- Fig. 20: eine perspektivische Teilansicht des Wischarms nach Fig. 19 von unten und
- Fig. 21: eine perspektivische Teilansicht des Wischarms nach Fig. 20 mit dem Anschlusselement.

### Ausführungsformen der Erfindung

Ein Wischblatt 10 in Flachbalkenbauweise ist aus einer Wischleiste 12, zwei parallelen nebeneinander liegenden Federschienen 24, zwei Endkappen 38 und einem Anschlusselement 52 aufgebaut. Die Wischleiste 12 besitzt eine Wischlippe 14, die über einen Kippsteg 16 mit einer Kopfleiste 18 verbunden ist. Diese weist an jeder Längsseite eine nach außen hin offene Längsnut auf, in die Federschienen 24 eingelegt werden. Zwischen den Längsnuten 20 verbleibt ein Steg 22. Die Federschienen 24 stehen seitlich und stirnseitig ein Stück weit aus den Längsnuten 20 vor. Auf den seitlich vorstehenden Teilen der Federschienen 24 sind die Endkappen 38 mit Führungsprofilen 46 und das Anschlusselement 52 mit Führungsprofilen 54 geführt.

Zum Fixieren der Endkappen 38 auf den Federschienen 24 besitzen diese an jeder Längsseite eine seitliche offene Aussparung 28, die spiegelsymmetrisch zu einer Mittellängsebene 168 angeordnet sind. In die Aussparungen 28 an den äußeren Längsseiten der Federschienen 24 greifen Rastnasen 42, die an den Innenseiten von Seitenwänden 40 der Endkappe 38 im Bereich der Führungsprofile 46 angeformt sind. Der aus den Längsnuten 20 stirnseitige Teil der Federschienen 24 verjüngt sich über Schrägen 30 zu einem schmalen Ende 32. Dadurch erweitert sich in diesem Bereich ein Spalt 36 zwischen den Federschienen 24, in den ein Distanznocken 44 stirnseitig eingreift. Dieser ist an einer Stirnwand der Endkappe 38 angeformt und hält die Enden der Federleisten 24 auf Distanz. Anstelle des Distanznockens 44 oder zusätzlich dazu können weitere Distanznocken 45 an der inneren Stirnseite der Endkappe 38 angeformt sein, die in entsprechende stirnseitige Aussparungen 34 der Federschienen 24 eingreifen. Die Schrägen 30, die schmalen Enden 32 und die Aussparungen 34 sind spiegelsymmetrisch zur Längsmittelebene 168 ausgebildet, sodass die Federschienen 24 unverwechselbar auf beiden Seiten des Wischblatts 10 montiert werden können. Die Endkappen 38 besitzen eine Deckwand 48, die die Führungsprofile 46 miteinander verbindet und die an ihrer Außenseite ein Schriftfeld 50 für Firmenangaben, Typ und sonstige Hinweise besitzt.

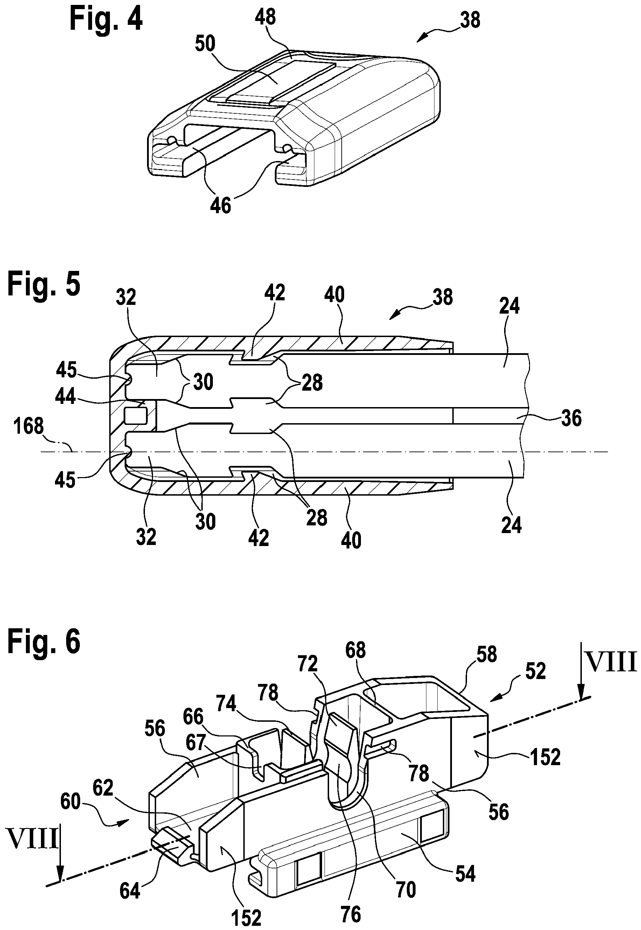

Im mittleren Bereich des Wischblatts 10 besitzen die Federschienen 24 Aussparungen 26 für das Anschlusselement 52. Diese sind ebenfalls an beiden Längsseiten einer jeden Federschiene 24 symmetrisch zur Längsmittelebene 168 angeordnet. In die Aussparungen 26 an den äußeren Längsseiten der Federschienen 24 greifen Rastnocken 80, die in Nuten 82 der Führungsprofile 54 vorgesehen sind, und zwar zweckmäßigerweise in der Mitte. Die untere Flanke 84 der Nut 82 ist konvex, ballig oder dachförmig ausgeführt, sodass die vorgekrümmte Federschiene 24 nicht behindert wird, wenn sich diese den unterschiedlichen Krümmungsradien einer nicht dargestellten Fahrzeugscheibe anpasst. Das Anschlusselement 52 (Fig. 6) besitzt zwei Seitenwände 56, die durch einen Boden 62, eine Stirnwand 58 und zwei Querwände 66, 68, von denen eine Querwand 66 eine Aussparung 67 besitzt, miteinander verbunden sind. Der Boden 62 hat an der der Kopfleiste 18 zugewandten Seite mindestens einen Fixiernocken 86, der im montierten Zustand gegen die Kopfleiste 18 drückt. Zwischen den Querwänden 66, 68 besitzt das Anschlusselement 52 eine offene Nabe, die aus festen Klippteilen 70 in den Seitenwänden 56 und aus einem Lagerteil 76 besteht, das an Federzungen 72, 74 vorgesehen ist. Die Öffnung der Nabe 70, 76 liegt auf der der Wischleiste 12 abgewandten Seite. Die offene Nabe 70, 76 dient zur Lagerung einer Achse 110, 166 eines Wischarms oder einer Achse 132 eines Adapterelements 120. Die nur wenig nachgiebigen Klippteile 70 sorgen für eine gute Führung des Wischblatts 10 in Längsrichtung und in Richtung auf die Wischleiste 12, also in den Hauptbelastungsrichtungen, während das Lagerteil 76 an den Federzungen 72, 74 eine ausreichende Fixierung entgegen der Anpresskraft eines Adapterelements 120 eines Wischarms 150 gewährleistet.

Der Wischarm 108 besitzt ein u-förmiges Querschnittprofil mit zwei Seitenwänden 112, zwischen denen am Ende eine Gelenkachse 110 fest angeordnet ist. Diese wird bei der Montage in Montagerichtung 119 quer zum Wischblatt 10 in die offene Nabe 70, 76 eingesetzt, wobei die Öffnung der offenen Nabe 70, 76 durch eine Verriegelungskappe 88 geschlossen und somit der Wischarm 108 zusätzlich gesichert wird.

Die Verriegelungskappe 88 besitzt nach innen offene, im Querschnitt u-förmige Führungsprofile 92, mit denen sie in Montagerichtung 118 in Längsrichtung des Wischblatts 10 auf der Außenkontur des Führungsprofils 54 des Anschlusselements 52 längsverschieblich geführt ist. Sie besitzt zwei Seitenwände 96, die durch eine Deckwand 95 und eine Stirnwand 94 miteinander verbunden sind. An der Innenseite der Deckwand 95 ist eine Arretierung 98 vorgesehen, die mit einem Rasthaken 64 zusammenwirkt, der an der Stirnseite 60 am Boden 62 des Anschlusselements 52 angeformt ist. Etwa in Verlängerung der Seitenwände 96 besitzt die Verriegelungskappe 88 etwas nach innen versetzt Wangen 90, die Langlöcher 102 aufweisen. Diese besitzen an einem dem Wischarm 108 zugewandten Ende eine Montageöffnung 100 für eine Gelenkachse 110 des Wischarms 108, während das andere Ende des Langlochs 102 als Verriegelungsteil 104 ausgebildet ist.

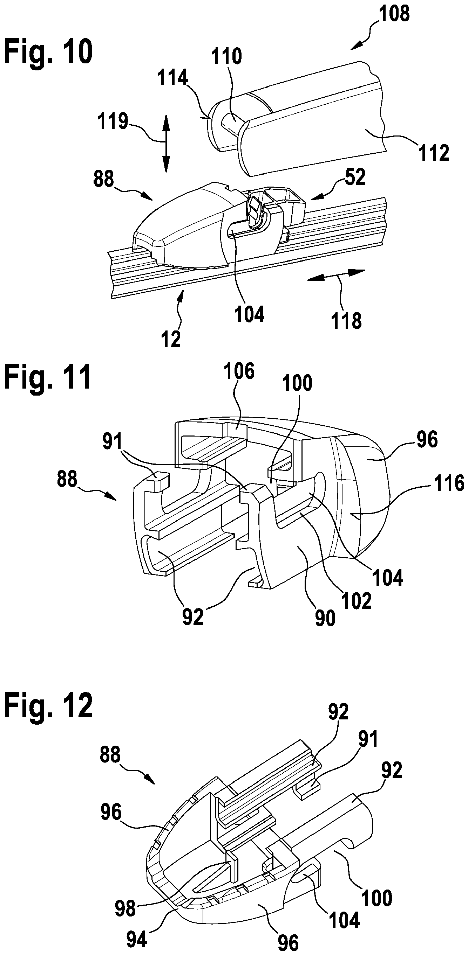

Bei der Montage befindet sich die Verriegelungskappe 88 in einer Öffnungsstellung (Fig. 10), in der die Montageöffnung 100 die offene Nabe 70, 76 freigibt, sodass der Wischarm 108 mit seiner Gelenkachse 110 montiert werden kann. Nach der Montage wird die Verriegelungskappe 88 in Montagerichtung 118 parallel zur Längsrichtung des Wischblatts 10 verschoben, bis die Arretierung 98 am Rasthaken 64 einrastet, und der Verriegelungsteil 104 des Langlochs 102 die offen Nabe 70, 76 verschließt. Dabei schließt die Stirnseite 114 des Wischarms 108 an eine Gegenfläche 116 der Verriegelungskappe 88 an, sodass sich ein geschlossenes, geräuscharmes Design ergibt. Die Stirnseite 114 und die Gegenfläche 116, die sich durch den Versatz der Wangen 90 zu den übrigen Seitenwänden 96 ergeben, sind koaxial zur Gelenkachse 110 gekrümmt. Somit ist eine störungsfreie Schwenkbewegung des Wischblatts 10 möglich. Die Wangen 90 der Verriegelungskappe 88 besitzen an ihren Enden, die dem Wischarm 108 zugewandt sind, nach innen abgewinkelte Führungsklauen 91. Diese greifen bei der Montage in seitliche Führungsnuten 78 des Anschlusselements 52 ein. Zur Erleichterung der Demontage der Verriegelungskappe 88 besitzt diese an der Stirnseite, die dem Wischarm 108 zugewandt ist, eine Aussparung 106, in die ein Werkzeug, z.B. ein Schraubenzieher, eingesetzt werden kann.

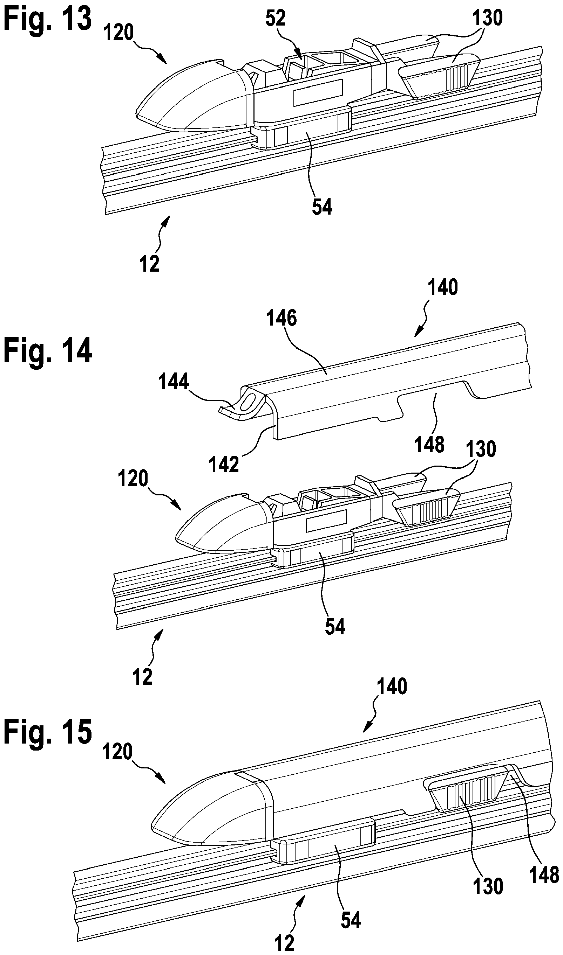

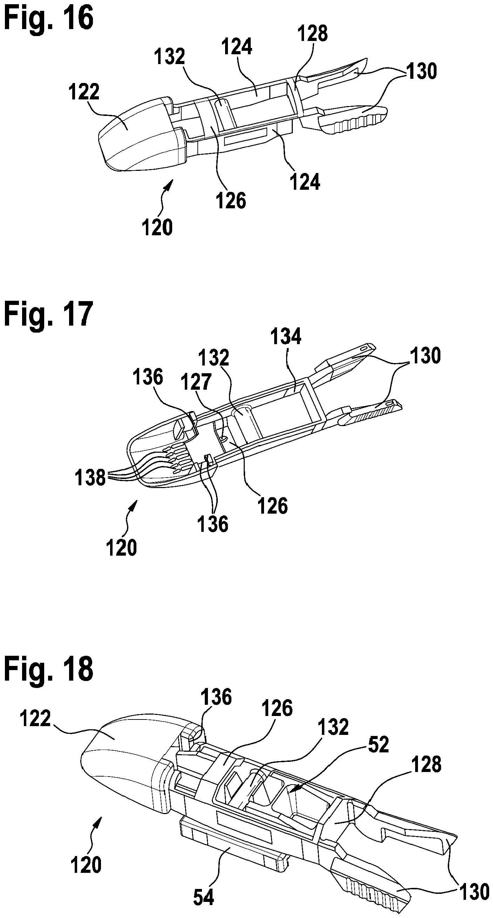

Das Wischblatt 10 in der Ausführung nach Fig. 13 bis 18 besitzt ein Adapterelement 120 mit zwei Seitenwänden 124, die durch eine Brücke 126, eine Achse 132, eine Querwand 128 und eine Stirnkappe 122 miteinander verbunden sind. Die Brücke 126 hat an ihrer dem Anschlusselement 52 zugewandten Seite einen Nocken 127, der im montierten Zustand in die Aussparung 67 der Querwand 66 eingreift und somit eine Fehlmontage verhindert. Die Achse 132 wird in die offene Nabe 70, 76 des Anschlusselements 52 eingesetzt. Ferner besitzt das Adapterelement 120 an den Innenseiten seiner Seitenwände 124 Führungsflächen 134, 136, die zusammen mit Führungsflächen 152 an den Außenseiten der Seitenwände 56 des Anschlusselements 52 für die seitliche Führung des Adapterelements 120 sorgen.

Die Stirnkappe 122 besitzt an der Innenseite ein Lagerelement 138 in Form von parallel zueinander in Längsrichtung verlaufenden Rippen, die an ihrer Außenkontur als Lagerwalze ausgebildet sind. Ein Wischarm 140 hat ein u-förmiges Querschnittprofil, dessen Deckwand 146 an der Stirnseite 142 verlängert ist. Die Verlängerung ist zu einer Lagerlasche 144 umgeformt. Bei der Montage wird die Lagerlasche 114 unter die Stirnkappe 122 gesteckt und umfasst das Lagerelement 138 über einen Teil seines Umfangs, sodass ein Schwenklager zwischen dem Wischblatt 10 und dem Wischarm 140 gebildet wird.

In Verlängerung der Seitenwände 124 über die Querwand 128 hinaus sind an dem Adapterelement 120 Federrasten 130 angeformt, die bei der Montage in Aussparungen 148 des Wischarms 140 einrasten. Dabei sind die Federrasten 130 auf die Aussparungen 148 so abgestimmt, dass zwischen dem Wischblatt 10 und dem Wischarm 140 eine ausreichende Schwenkbewegung möglich ist. Zur Demontage des Adapterelements 120 können die Federrasten 130 elastisch nach innen gedrückt werden, wodurch der Wischarm 140 frei gegeben wird und mit einer Schwenkbewegung um etwa 90 Grad aus der Stirnkappe 122 gezogen werden kann.

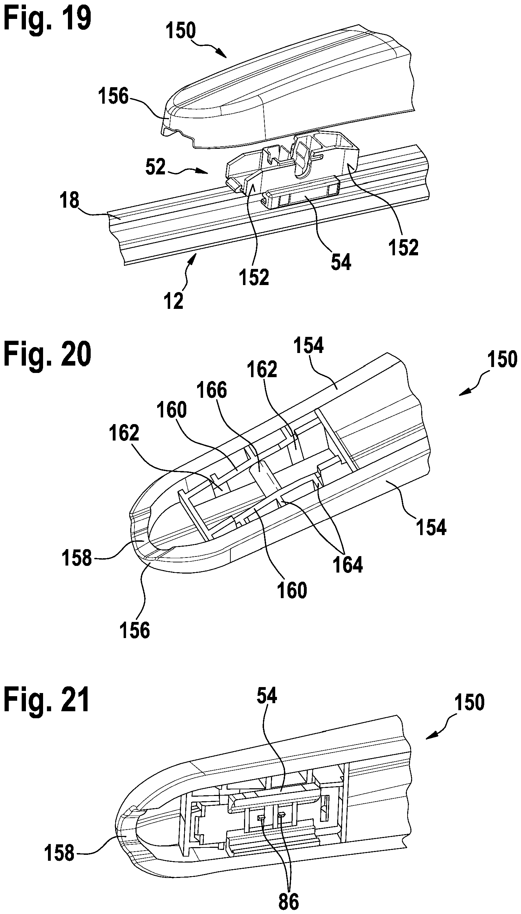

Die Ausführung nach Fig. 19 bis 21 besitzt einen Wischarm 150, der zumindest an seinem wischblattseitigen Ende ein u-förmiges Querschnittprofil aufweist, dessen Ende durch eine abgerundete Stirnwand 156 bis auf eine Aussparung 158 für die Kopfleiste 18 der Wischleiste 12 geschlossen ist. Die Aussparung 158 ist so bemessen, dass eine ausreichende Schwenkbewegung des Wischblatts 10 gegenüber dem Wischarm 150 möglich ist. Dieser besitzt Seitenwände 154, zwischen denen parallel zueinander verlaufende Längswände 160 mit Führungsflächen 162 vorgesehen sind. Zwischen diesen wird das Anschlusselement 52 aufgenommen. Die Längswände 160 werden durch eine Achse 166 miteinander verbunden. Diese greift bei der Montage in die offen Achse 70, 76 des Anschlusselements 52 ein und bildet damit ein Schwenklager für das Wischblatt 10.

## Patentansprüche

1. Wischblatt (10) mit einer Wischleiste (12), deren Kopfleiste (18) auf beiden Längsseiten jeweils eine Längsnut (20) hat, die durch einen Steg (22) voneinander getrennt sind und in die Federschienen (24) eingesetzt sind, die zu den äußeren Längsseiten offene Aussparungen (28) aufweisen, durch die sie in Längsrichtung relativ zu Endkappen (38) fixiert sind, wobei die Endkappen (38) Distanznocken (44) aufweisen, die von den Stirnseiten in einen Spalt (36) zwischen den Federschienen (24) ragen, **dadurch gekennzeichnet, dass** die Federschienen (24) im mittleren Bereich an ihren beiden Längsseiten Aussparungen (26) aufweisen, die spiegelbildlich zueinander angeordnet sind und in die mindestens ein Rastnocken (80) eines Anschlusselements (52) eingreift.

2. Wischblatt (10) nach Anspruch 1, **dadurch gekennzeichnet, dass** die Endkappe (38) Rastnasen (42) besitzt, die in die Aussparungen (28) an den äußeren Längsseiten der Federschienen (24) eingreifen.

3. Wischblatt (10) nach Anspruch 1 oder 2, **dadurch gekennzeichnet, dass** die Federschienen (24) im Bereich des Distanznockens (44) schmale Enden (32) besitzen, sodass der Spalt (36) zwischen ihnen in diesem Bereich breiter ist, als auf seiner übrigen Länge.

4. Wischblatt (10) nach einem der vorhergehenden Ansprüche, **dadurch gekennzeichnet, dass** die Endkappe (38) quer zu ihrer Längsrichtung zusätzlich zum Distanznocken (44) oder stattdessen weitere Distanznocken (45) aufweist, die in entsprechende Aussparungen (34) an den Stirnseiten der Federschienen (24) eingreifen.

5. Wischblatt (10) nach Anspruch 4, **dadurch gekennzeichnet, dass** der Rastnocken (80) in einer Nut (82) eines Führungsprofils (54) vorgesehen ist, das auf einem aus den Längsnuten (20) vorstehenden Teil der Federschienen (24) sitzt.

6. Wischblatt (10) nach Anspruch 5, **dadurch gekennzeichnet, dass** das Anschlusselement (52) eine Nabe (70, 76) besitzt, die zu einer von der Wischleiste (12) abgewandten Seite offen ist und aus festen Klippteilen (70) in Seitenwänden (56) des Anschlusselements (52) und einem Lagerteil (56) gebildet wird, das an Federzungen (72, 74) angeordnet ist.

7. Wischblatt (10) nach einem der Ansprüche 4 bis 6, **dadurch gekennzeichnet, dass** das Anschlusselement (52) an seiner der Kopfleiste (18) zugewandten Seiten einen Fixiernocken (86) besitzt, der im montierten Zustand gegen die Kopfleiste (18) drückt.

8. Wischblatt (10) nach einem der Ansprüche 4 bis 7, **dadurch gekennzeichnet, dass** auf der Außenkontur des Führungsprofils (54) des Anschlusselements (52) eine Verriegelungskappe (88) mit Führungsprofilen (92) geführt ist.

9. Wischblatt (10) nach einem der Ansprüche 4 bis 8, **dadurch gekennzeichnet, dass** die Verriegelungskappe (88) in ihren seitlichen Wangen (90) parallel zu ihren Führungsprofilen (92) verlaufende Langlöcher (102) aufweist, die jeweils an einem einem Wischarm (108) zugewandten Ende eine Montageöffnung (100) für eine Gelenkachse (110) des Wischarms (108) besitzen, während das andere Ende als Verriegelungsteil (104) ausgebildet ist.

10. Wischblatt (10) nach Anspruch 9, **dadurch gekennzeichnet, dass** die Verriegelungskappe (88) an dem dem Wischarm (108) zugewandten Ende an ihren Wangen (90) nach innen abgewinkelte Führungsklauen (91) hat, die in nach außen weisende Führungsnuten (78) an den Seitenwänden (56) des Anschlusselements (52) eingreifen.

11. Wischblatt (10) nach einem der Ansprüche 4 bis 10, **dadurch gekennzeichnet, dass** die Verriegelungskappe (88) an der Innenseite eine Arretierung (98) besitzt, die mit einem Rasthaken (64) an der dem Wischarm (108) abgewandten Stirnseite des Verbindungselements (52) zusammenwirkt.

12. Wischblatt (10) nach Anspruch 1, **dadurch gekennzeichnet, dass** an dem Anschlusselement (52) ein Adapterelement (120) befestigt ist, das mit einer Achse (132) zwischen seinen Seitenwänden in die offene Nabe (70, 76) des Anschlusselements eingesetzt ist und durch Führungsflächen (134, 136) an den Innenseiten der Seitenwände (124) seitlich geführt ist, wobei in einer Stirnkappe (122) ein Lagerelement (138) für einen Wischarm (140) mit einer stirnseitig angeordneten Lagerlasche (144) vorgesehen ist.

13. Wischblatt (10) nach Anspruch 12, **dadurch gekennzeichnet, dass** das Lagerelement (138) aus mehreren parallelen in Längsrichtung angeordneten Rippen besteht, deren Außenkonturen eine Lagerwalze bilden.

14. Wischblatt (10) nach Anspruch 12 oder 13, **dadurch gekennzeichnet, dass** das Adapterelement (120) in Verlängerung seiner Seitenwände (124) Federrasten (130) aufweist, die im montierten Zustand in Aussparungen (148) des Wischarms (140) einrasten.
